# EUROPEAN PATENT APPLICATION

(11) **EP 4 068 181 A1**
(43) Date of publication of application: **05.10.2022**
(21) Application number: 22165771.1
(22) Date of filing: 31.03.2022
(51) Int. Cl.: G06Q 10/08

(54) **SYSTEM AND METHOD FOR DETECTING AND SIGNALLING ANOMALIES IN SECURING A LOAD IN AN INDUSTRIAL VEHICLE**

(30) Priority: 01.04.2021 IT 202100008207
(71) Applicant: RECO s.r.l., 23875 Osnago (LC) (IT); PHLOEMA S.r.l., 20123 Milano (IT)
(72) Inventor: Redaelli, Guido, Osnago (LC) (IT); Casella, Attilio Paolo, Milano (IT); Strina, Paolo, Osnago (LC) (IT); Galletti, Davide Gianni Mario, Osnago (LC) (IT)
(74) Representative: Mati, Silvia

(57) **Abstract**

The present invention relates to a system (10) and a method (100) for detecting and signalling anomalies in securing a load in an industrial vehicle, wherein the system comprises a transport surface (51) of an industrial vehicle and a plurality of first passive-type transceiver devices (11) each constrained to the transport surface (51) at a respective storage area (51a) of the transport surface (51), each first passive transceiver device (11) of the plurality of first passive transceiver devices (11) comprising a first identification code; at least one fastening element (14) and at least a second passive-type transceiver device (13), the at least a second passive transceiver device (13) comprising a second identification code and being constrained to the at least one respective fastening element (14), where the at least one fastening element (14) is constrainable to the transport surface (51) so that it can exert a holding action on a transport package (12) stored at a respective storage area of the transport surface (51); and at least one portable-type query device (15) configured to detect, for at least one storage area (51a) of the transport surface (51), a first and a second identification code respectively of a first passive transceiver device (11) constrained to the at least one storage area (51a) of the transport surface (51), and of a second passive transceiver device (13) associated with a fastening element (14) acting on the at least one storage area (51a) of the transport surface (51) and to generate at least one set of three identification codes by associating the first and the second detected identification codes with a third identification code of a transport package (12) intended to be stored in the at least one storage area.

## Description

### TECHNICAL FIELD

The present invention generally relates to the field of road logistics and in particular to a system for detecting and signalling anomalies in securing a load in an industrial vehicle and to a method for detecting and signalling which can be implemented through such a system, aimed, inter alia, at ensuring greater safety in road transport.

### BACKGROUND

Within the scope of the present description and the appended claims, "industrial vehicle" means a vehicle used for the road transport of goods, such as vans, lorries, articulated lorries, semi-trailers or similar vehicles.

Within the scope of the present description and in the appended claims, "transport surface" means the set of surfaces of the industrial vehicle intended to hold packages during transport, including the vehicle floor, peripheral walls, uprights, etc.

Within the scope of the present description and the appended claims, "fastening elements" means devices configured to securely anchor transport packages to the transport surface of an industrial vehicle. These include, for example, belts, winches, chains with ratchets, horizontal or vertical bars and so on.

Within the scope of the present description and in the appended claims, "transport package" means an object, possibly provided with packaging in the form of a cover and/or pallet, intended to be transported from an origin to a destination.

Within the scope of the present description and in the appended claims, "load" means the set of transport packages which are secured to the transport surface to be moved from an origin to a destination.

The loading process of an industrial vehicle generally takes place by arranging on the transport surface of the vehicle a set of transport packages consisting of goods which may have packaging, such as goods securely constrained above pallets. The transport surface of the vehicle is usually equipped with a plurality of fastening elements which are constrained or constrainable in predefined positions on the transport surface and configured to securely anchor the packages. The transport packages are then positioned at the predefined positions and secured to one or more fastening elements so as to balance the inertia forces generated during transport, including loading and unloading. In particular, securing the load consists of constraining each transport package to the fastening elements, which are in turn secured to the transport surface, in all directions and senses, taking into account both the risk of slipping and the risk of the packages tipping over.

Despite the provision of fastening elements distributed across the transport surface, the load is often not properly secured to the vehicle. In particular, there are different types of fastening elements which are more or less suitable for anchoring the specific transport package. An important factor determining whether the correct fastening element has been used is, for example, the weight of the package.

An incorrect choice of fastening elements can, in some cases, be the cause of accidents involving industrial vehicles. In fact, the accelerations to which the industrial vehicle is subjected give rise to inertia forces acting on the load. These forces, if not adequately counteracted by a suitable fastening system, cause the load to shift and even fall, with damage to the goods and the vehicle, as well as the risk of causing road accidents involving third parties.

In addition, if the load is not carried out in accordance with the distribution plan, thus resulting in an unbalanced weight distribution on the transport surface, an excess load on the front or rear axle of the vehicle may occur. Such a circumstance typically occurs following the unloading of only part of the transport packages forming the load and must be identified and detected in order to reposition the packages to return to a balanced condition.

The Applicant has found that there are currently no systems capable of detecting and automatically signalling anomalies in securing the load in an industrial vehicle with respect to what is indicated in the standard UNI EN 12195-1 and the European Directive 2014/47/EU. The assessment of the adequacy of the load securing carried out is currently left to the personnel involved with the loading and unloading of the vehicle who, even without verification, certify the correctness of both the load distribution and the type of fastening elements used.

In the field of road logistics, the systems currently used are mainly aimed at merely tracking the movement of transport packages. For example, it is well known that RFID (Radio Frequency Identification) technology is used to track the movement of packages transported by lorries. RFID technology uses the ability to exchange data over the air via a frequency-modulated signal between a transceiver device (Transponder or Tag), generally passive, and an active query device (Reader). In particular, RFID tags are integrated circuits in a medium shaped like a tag in which at least one unique code is stored for identification purposes. Furthermore, the tags are configured to respond to remote querying actively carried out by the reader device. Passive RFID tags, on the other hand, are not capable of actively transmitting data, but always require that the query be initiated by a reader device. In fact, the active querying transmits an electromagnetic signal that supplies the passive tag with the energy it needs to in turn transmit data in response. Such features make them particularly suitable for tracking goods. The use of RFID technology in logistics can be derived, for example, from documents GB2465964A and NZ620448 which teach how to provide pallet-like packaging with RFID tags.

The known systems are capable of automatically detecting the presence of a package or specific packages inside an industrial vehicle, but are unable to provide any information about the correct positioning and securing of the transport packages inside the vehicle.

### OBJECTS AND SUMMARY OF THE INVENTION

In view of the above, the problem underlying the present invention is to devise a system and method for detecting and signalling anomalies in securing a load in an industrial vehicle.

Within the scope of such a problem, an object of the present invention is to obtain a system and a method for detecting and signalling anomalies in securing a load in an industrial vehicle which operates automatically and is easily used by the personnel involved with the loading and unloading operations of the vehicle, including for example the driver of the vehicle, the logistics personnel and so on, allowing them to certify the correctness of securing the load according to the safety standards applied in the specific sector.

Still another object of the present invention is to devise a system and method for detecting and signalling anomalies in securing a load in an industrial vehicle which is capable of assessing the correctness of the fastening elements used to hold the specific package.

It is not the least object of the present invention to devise a system and a method for detecting and signalling anomalies in securing a load in an industrial vehicle which is capable of automatically assessing the congruence of the load distribution carried out with the load limits on the axles of the vehicle.

A further object of the present invention is to devise a system and a method for detecting and signalling anomalies in securing a load in an industrial vehicle which is capable of automatically assessing the congruence of the load distribution carried out in terms of compatibility and/or limit quantity of the products transported.

In accordance with a first aspect thereof, the invention thus relates to a system for detecting and signalling anomalies in securing a load in an industrial vehicle comprising:
- a transport surface of an industrial vehicle and a plurality of first passive-type transceiver devices each constrained to the transport surface at a respective storage area of the transport surface, each first passive transceiver device of the plurality of first passive transceiver devices comprising a first identification code;
- at least one fastening element and at least a second passive-type transceiver device, the at least a second passive transceiver device comprising a second identification code and being constrained to the at least one respective fastening element, in which the at least one fastening element is constrainable to the transport surface so that it can exert a holding action on a transport package stored at a respective storage area of the transport surface;
- at least one portable-type query device configured to detect, for at least one storage area of the transport surface, a first and a second identification code respectively of a first passive transceiver device constrained to the at least one storage area of the transport surface and of a second passive transceiver device associated with a fastening element acting on the at least one storage area of the transport surface and to generate at least one set of three identification codes, associating the first and second detected identification codes with a third identification code of a transport package intended to be stored in the at least one storage area.

The Applicant has identified that by virtue of the use of at least one set of three identification codes related to a storage area within the transport surface of the vehicle, a fastening element acting in the given storage area of the transport surface and a transport package stored in the given storage area, it is possible to accurately reconstruct the displacement of the packages on the transport surface and the type of fastening elements used to secure the package. By detecting such data, for example during loading, it is possible to provide the information strictly necessary to verify the correctness of the load securing in an accurate and reliable manner.

In particular, the use of passive transceiver devices associated with the storage areas and reading such passive devices by means of a portable-type query device which is independent of the storage areas makes it possible to carry out a fine mapping of the transport area. Similarly, the use of passive-type transceiver devices associated with the fastening elements allows several fastening elements to coexist closely together on the transport surface, while preserving the possibility, during the subsequent verification step, of discriminating which fastening element is in the specific storage area and is constrained to the given transport package. In fact, by virtue of the particular manner in which data is exchanged between a passive RFID tag and the portable device which queries it, the latter is able to recognise the distance at which the passive tag is located based on the power returned by the passive tag in responding to the solicitation transmitted by the reader device. Such a feature makes it possible to discriminate, area by area, the origin of the response signal and thus the presence of the tag in the given area, for example by filtering response signals according to their power.

Such a difference in power would not be given with the necessary precision if the transceiver devices associated with the storage areas and fastening elements were of an active type, such as RFID tag reading devices. Moreover, in the absence of active transceiver devices permanently located at the storage areas and on board the fastening elements, the system is much simpler to create as there is no need to implement special wiring and arrange for powering the transceiver device. Moreover, such a need could conflict with the demand for compatibility between different types of trailers and different types of tractors.

In addition, the use of a portable query device (reader) makes it much easier to process the data collected, as such information can be cross-referenced with any information on the position in which the reading occurs.

Furthermore, the use of a portable query device (reader) allows the device to be placed in the most suitable location for reading, thus avoiding any shielding effects from the individual packages.

Last but not least, the use of a portable query device (reader) allows third parties to perform an asseveration of the data collected, enabling the use of a mobile query device not necessarily provided by the vehicle owner.

The present invention may have at least one of the preferred following features; the latter may in particular be combined with one another as desired in order to meet specific application needs.

In a variant of the invention, the query device is configured to generate a spatial displacement map of the at least one set of three identification codes on the transport surface in which the at least one set of three identification codes generated by the query device is spatially displaced on the transport surface.

Preferably, the spatial displacement map of at least one set of three identification codes is a one-, two- or three-dimensional map.

Advantageously, such a map allows the necessary checks to be carried out and is further the basis for any further checks which can be carried out on the displacement of the load.

In a variant of the present invention, the third identification code is a code detectable through image capture and processing, for example a barcode or QR code, applied to the transport package.

Conveniently, this makes it possible to apply the system according to the invention to transport packages in their actual form, since it is already widely used to equip transport packages with at least one identification code.

Alternatively, the third identification code is an identification code of a third passive transceiver device constrained to the transport package.

Advantageously, equipping the transport packages with a third passive transceiver device identified by its own identification code and using such a code as a third identification code allows to detect the set of three codes in a simpler manner, making it possible to carry out subsequent operations to verify the consistency of the data collected.

Preferably, the system comprises at least one verification device configured to detect the set of transceiver devices present on the transport surface and verify a correspondence with the set of transceiver devices detected by the query device.

In an alternative embodiment, the verification device is configured to detect the spatial displacement of the passive transceiver devices on the transport surface and verify a correspondence with the spatial displacement map of the at least one set of three identification codes on the transport surface generated by the query device.

It is thereby advantageously possible to certify the correctness of the data collected during loading.

In a further embodiment, at least one among the first, the second and the third passive transceiver devices detected for the at least one storage area comprises a verification code stored therein.

Alternatively, the system comprises a database accessible from the query device in which is stored at least one verification code associated with at least one among the first and the second passive transceiver devices detected for the at least one storage area and the transport package identification code.

According to a further alternative, at least one among the first and the second passive transceiver devices detected for the at least one storage area comprises a verification code stored therein, and the system comprises a database accessible by the query device in which the at least one verification code associated with the transport package identification code is stored.

This advantageously allows to carry out specific checks on the suitability of the load carried out, for example in terms of correct weight balance, suitability of the fastening elements used and so on.

Preferably, the query device comprises electronic processing means configured to read or retrieve from the database the at least one verification code comprised or associated with the first and/or the second passive transceiver device and/or the identification code of the package related to the at least one set of three identification codes and, based on the at least one verification code, process information about the correct positioning of the package within the transport surface and/or securing the package by means of the fastening element.

In a variant of the invention, the query device and the verification device are implemented by means of the same hardware.

Alternatively, the verification device is a different device from the query device, preferably made as an antenna passage configured to allow an industrial vehicle to transit through it.

In a variant of the invention, the first, second and third passive transceiver devices are implemented using RFID or dual frequency technology.

Preferably, the query device is configured to operate in a frequency range between 3 MHz - 30 MHz and/or 300 MHz - 3 GHz.

In accordance with a second aspect thereof, the invention relates to a method for detecting and signalling anomalies in securing a load in an industrial vehicle comprising steps consisting of:
- detecting, by means of at least one portable-type query device, at least one pair of identification codes of respective passive-type transceiver devices, in which a first passive transceiver device is constrained to a transport surface of an industrial vehicle in a given storage area and a second passive transceiver device is constrained to a fastening element anchored to the transport surface so that it can exert a holding action on a transport package stored in the given storage area,
- associating the at least one pair of identification codes of the first and second passive transceiver device with at least one identification code of the transport package stored in the given storage area, generating at least one set of three identification codes; and
- associating at least one set of three identification codes with the given storage area of the transport surface.

Advantageously, the method of detecting and signalling anomalies in securing a load in an industrial vehicle thus implemented allows to achieve the same advantages as those described with reference to the system for detecting and signalling anomalies in securing a load in an industrial vehicle according to the invention.

In a variant of the invention, the method comprises the steps of generating a spatial displacement map in which the at least one set of three identification codes is spatially displaced on the transport surface, according to a one-dimensional, two-dimensional or three-dimensional displacement.

Preferably, the identification code of a transport package is an identification code of a third, passive transceiver device.

More preferably, the step of detecting the set of passive transceiver devices present on the transport surface comprises additionally detecting the third passive transceiver device.

In a variant of the invention, the method additionally comprises the step of detecting the set of transceiver devices present on the transport surface through a verification device, and verifying a correspondence with the at least one set of three identification codes detected through the at least one query device.

Preferably, the step of detecting the set of passive transceiver devices comprises detecting the spatial distribution of the passive transceiver devices present on the transport surface and verifying a correspondence with the spatial displacement map of the at least one set of three identification codes on the transport surface generated during the association step.

In a variant of the invention, the method comprises the steps of detecting or retrieving the at least one verification code associated with the at least one passive transceiver device and/or the transport package identification code related to the at least one set of three identification codes and, based on the at least one verification code, performing one or more of the following verification operations:
- on the basis of a plurality of third verification codes each associated with an identification code of a transport package and relating to a weight of the respective transport package, verifying a congruence of the weight distribution on the transport surface with the vehicle capacity limits;
- on the basis of a plurality of third verification codes each associated with an identification code of a transport package and relating to a type of product contained in the respective transport package, verifying a congruence of the distribution of the product types on the transport surface with respect to compatibility criteria of the product types and/or with respect to limit transport quantities per product type;
- on the basis of a first verification code associated with the first passive transceiver device and related to a vehicle license plate, verifying a correspondence with a vehicle license plate registered for the transport of the package, thus determining the correctness of the vehicle on which the transport package has been loaded;
- on the basis of a second verification code associated with the second passive transceiver device and related to an expiration date and/or a revision date of the fastening element, verifying whether at least one among the expiration date and the revision date has passed, thus being able to verify whether the fastening element has expired and/or has been correctly maintained; and
- on the basis of a second verification code associated with the second passive transceiver device and relating to a limit weight of a package that can be secured through the fastening element and a third verification code associated with an identification code of a transport package and related to a weight of the transport package, verifying whether the weight of the transport package exceeds the limit weight of a package that can be secured through the fastening element. It thereby advantageously possible to check the suitability of the fastening element for securing the transport package.

### BRIEF DESCRIPTION OF THE DRAWINGS

Further features and advantages of the present invention will be more evident from the following detailed description of certain preferred embodiments thereof made with reference to the appended drawings.

The different features in the individual configurations may be combined with one another as desired according to the preceding description, should there be advantages specifically resulting from a specific combination.

In such drawings,
- figure 1 is a schematic depiction of an industrial vehicle comprising a system for detecting and signalling anomalies in securing a load in an industrial vehicle according to a preferred embodiment of the present invention;
- figure 2 is a partial schematic depiction of a load surface, showing a first type of load fastening elements, of an industrial vehicle comprising an embodiment of the system for detecting and signalling anomalies according to the invention;
- figure 3 is a partial perspective depiction of a transport package secured by means of a second type of load fastening elements on a load surface of an industrial vehicle comprising a system for detecting and signalling anomalies according to the present invention;
- figure 4 is a flow chart schematically depicting the sequence of main steps of a method for detecting and signalling anomalies in securing a load in an industrial vehicle according to a preferred embodiment of the present invention;
- figure 5 is a schematic depiction of a verification device used in a preferred embodiment of a system for detecting and signalling anomalies in securing a load in an industrial vehicle according to the present invention.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It is in any case to be noted that there is no intention to limit the invention to the specific embodiment illustrated rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

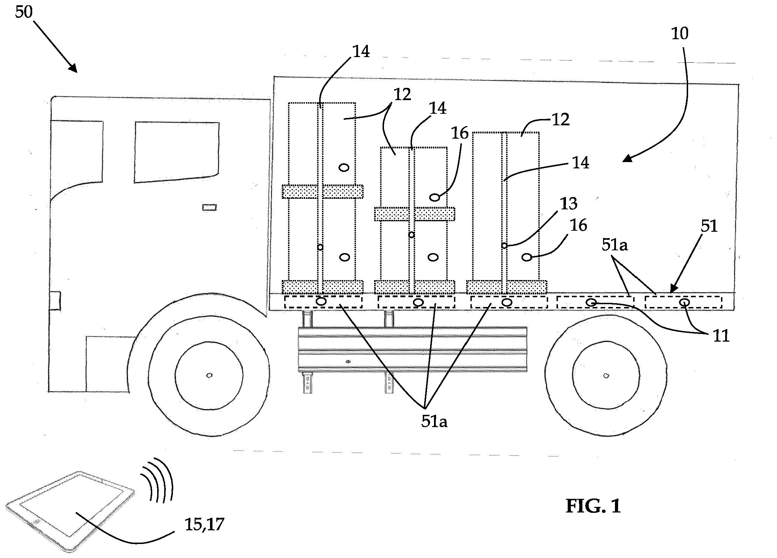

With reference to Figs. 1-3, certain main elements of an industrial vehicle 50 provided with a system for detecting and signalling anomalies in securing a load in an industrial vehicle according to the present invention, collectively referred to as 10, are illustrated.

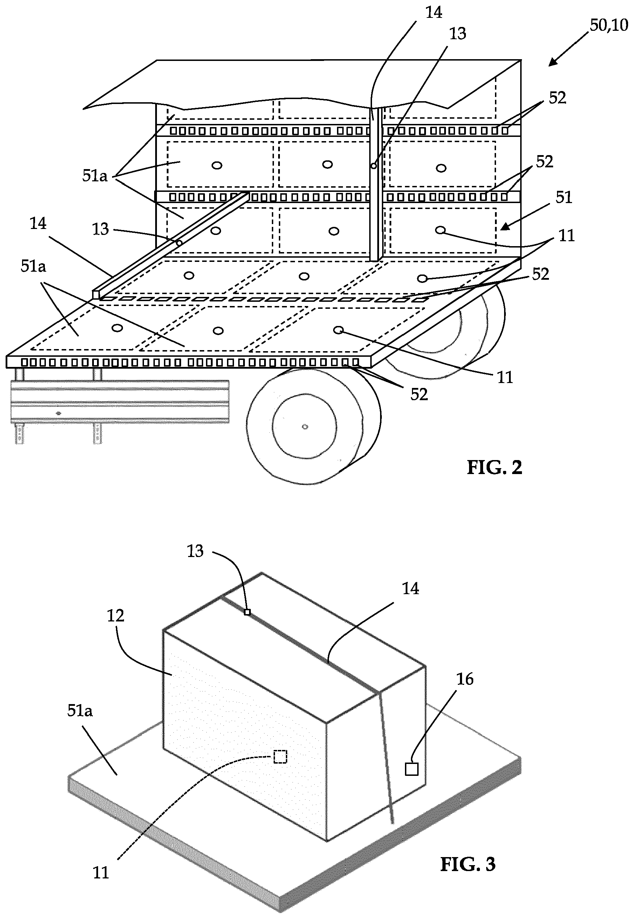

The detection and signalling system 10 comprises a plurality of first passive-type transceiver devices 11 constrained to a transport surface 51 - which in the example of Fig. 1 comprises a vehicle floor, whereas in the example in Fig. 2 it comprises a platform and the related peripheral walls - at a plurality of storage areas 51a of the transport surface 51, for example arranged in a grid (as shown in Fig. 2) or arranged in a line along the long side of the floor (as shown in Fig. 1).

Each first transceiver device 11 comprises an identification code of the first device itself so as to uniquely identify the storage area 51a at which the transceiver device 11 is constrained.

Thereby, the plurality of first transceiver devices 11 performs a mapping of the transport area 51, identifying a plurality of storage areas 51a of transport packages 12, where each storage area 51a is configured to accommodate one or more packages 12, for example stacked. By way of example, consider that if the first transceiver devices 11 are positioned along a line parallel to a long side of the transport surface 51, the storage areas 51a are defined between two adjacent first transceiver devices 11 and extend along the depth of the transport surface 51.

The first transceiver devices 11 are preferably of the passive RFID type or are configured to operate either as a passive RFID tag or as a passive NFC (near field communication) tag. NFC is a short-range (up to about 10 cm) over-the-air transceiver technology which can also be implemented through passive tags in the form of tags and query devices, which, however, unlike RFID, can only detect passive tags if they are placed in close proximity thereto. The tags capable of operating at both RFID and NFC frequencies are also known as dual frequency tags.

Preferably, the first transceiver devices 11 comprise, in addition to the identification code of each first device itself, at least a first additional verification code. The first verification code for the first transceiver devices 11 can for example comprise the identification coordinates of a storage area comprised in the transport surface, allowing the location of the first transceiver device 11 to be accurately verified within a map of the transport surface. Alternatively or additionally, the first transceiver device verification code 11 comprises the vehicle license plate so as to allow a verification that the goods placed in the area identified by a first transceiver device 11 have been loaded onto the correct vehicle.

The detection and signalling system 10 further comprises a plurality of second passive-type transceiver devices 13 each constrained to a respective fastening element 14 constrained to the transport surface 51 or configured to be connected to such a surface 51, for example by means of an anchoring element 52 (shown in Fig. 2) of the plurality of anchoring elements present on the transport surface 51.

The second transceiver devices 13 are also preferably of the passive RFID type or are configured to operate as both a passive RFID tag and a passive NFC (near field communication) tag. Furthermore, the second transceiver devices 13 also preferably comprise, in addition to an identification code for each second device itself, at least a second additional verification code. The second verification code of the second transceiver devices 13 can for example comprise the limit weight of the transport package 12 which can be secured by means of the corresponding fastening element 14. In addition or alternatively, the second verification code of the second transceiver devices 13 can comprise the expiration date, the revision date and/or an identification of the supplier of the related fastening element 14.

The detection and signalling system 10 further comprises at least one query device 15 (reader) configured to detect the codes of a first transceiver device 11 related to a specific area of the transport surface 51 and a second transceiver device 13 related to a fastening element 14 constrained or anchored so that it can exert its holding action on a transport package 12 positioned in the specific area 51a of the transport surface 51 and associate the codes of the first and the second transceiver devices 11,13 with an identification code of the transport package 12.

Such an association is performed by means of the query device 15 by the operator who is carrying out the loading once he has positioned a given package 12 in the specific area 51a of the transport surface 51 and secured such a package 12 by means of the fastening element 14 constrained or anchored to the transport surface 51 so as to be able to act at the specific area 51a in which the package 12 is positioned.

Advantageously, the query device 15 is of the portable type and can thus be positioned in the most suitable place to read the codes of the passive transceiver devices, in particular a sequential reading thereof, as well as allowing the reading of codes contained in NFC-type transceiver devices or other types of codes.

The identification code of the transport package 12 can for example be a code detectable through image capture and processing, for example by capturing an image of a code (barcode, QR code, and so on) present on the package 12. For this purpose, the query device 15 is preferably provided with an imaging interface such as a camera to detect a barcode, QR code or other type of identification code of the package 12.

Alternatively or additionally, the identification code of the transport package 12 is an identification code of a third transceiver device 16 of a plurality of third passive-type transceiver devices 16. Each third transceiver device 16 is associated with a respective transport package 12 as shown in Fig. 3.

Preferably, the identification code of the transport package 12 - whether from the third transceiver device 16 or a code previously present on the package 12 - is associated in addition to at least a third verification code, for example related to a data indicative of the weight of the package 12 possibly associated in addition or alternatively to a datum indicative of the overall dimensions of the package 12, a datum related to the nature of the package (hazardousness, fragility and so on) or, again, a data related to the priority of unloading the package 12. By means of the query device 15, it is further possible to associate any further data related to the transport package 12 with the identification code of the transport package 12, for example data or further codes which can be acquired by means of the imaging interface.

By being able to read the identification codes of specific transceiver devices or groups of transceiver devices or locally read other types of identification codes, the portable query device 15 is used during loading to create a map of the packages 12 displaced on the transport surface 51 as well as the fastening means 14 used to secure them.

If the first transceiver devices 11 are positioned along a line (as, for example, shown in Fig. 1), the package displacement map is a one-dimensional map. If the first transceiver devices 11 are arranged in a grid (as shown in Fig. 2), the package displacement map is a two-dimensional map. In such a second hypothesis, and in the presence of a verification code comprised or associated with the identification code of package 12 and related to an indicative datum of the dimensions of package 12, it is possible to process a three-dimensional map of the displacement of the packages 12.

To this end, the query device 15 comprises a transceiver circuit operating at HF frequencies (3 MHz - 30 MHz), to detect identification codes using NFC technology, or at UHF frequencies (300 MHz - 3 GHz), to detect identification codes using RFID technology, or capable of operating in both frequency ranges (dual frequency device).

The query device 15 further comprises electronic processing means (not shown) configured to read or retrieve from a database at least one verification code comprised or associated with a respective transceiver device 11,13,16 or the identification code of the package 12 and, based on the verification code, process information about the correct positioning and securing of the package 12 within the transport surface 51. In particular, in the presence of a three-dimensional map of the distribution of packages 12, an overall calculation of the load distribution can be carried out.

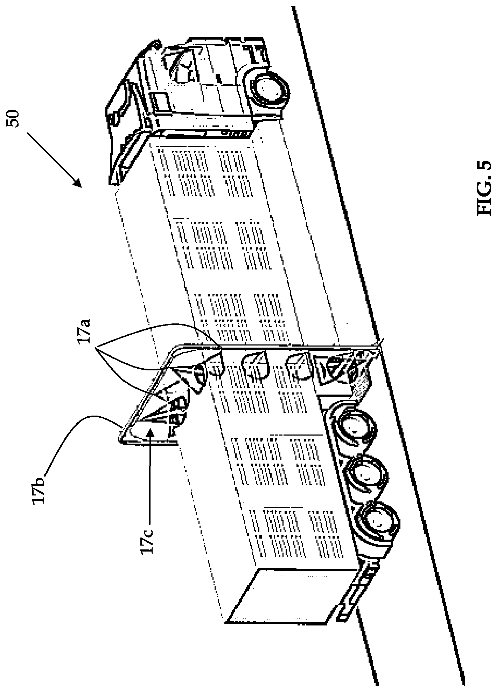

A preferred embodiment of the detection and signalling system 10 additionally comprises a verification device 17 which from a hardware viewpoint can coincide with the query device 15, as shown in Fig. 1, or be an independent device, or be made in the form of a passageway provided with a plurality of antennas and configured to allow the vehicle to transit through it, as shown in Fig. 5.

If the identification code of the package 12 is the code of a third transceiver device 16, the verification device 17 is configured to detect the set of transceiver devices 11,13,16 present inside the vehicle once the loading operations are completed and thereby validate the map of sets of three codes identifying the area, the fastening element and the package associated with each other, created by the query device 15 during the loading step.

Furthermore, the query device 15 and/or the verification device 17 are configured to verify compatibility between the storage area, the fastening element and the package, based on at least one of the first, second and third verification codes present in or associated with the first 11, second 13 and third 16 transceiver device, respectively.

The verification device 17 is also configured to detect the displacement of the transceiver devices 11,13,16 with reference to the transport surface 51 to verify whether the devices forming the detected sets of three are actually arranged near each other.

For this purpose, the verification device 17 is configured to separately detect only the transceiver devices 11,13,16 present in a sector of the transport surface 51 and repeat such an operation for each sector of a set of sectors forming said transport surface 51.

In order to detect only the transceiver devices 11,13,16 present in a certain sector of the transport surface 51, the verification device 17 according to the embodiment of Fig. 5 comprises a plurality of directional antennas 17a placed on a bridge structure 17b and all directed towards the centre of the passageway 17c defined below the bridge structure 17b.

Otherwise, in the embodiment of Fig. 1, the verification device 17 comprises software means (not illustrated) capable of filtering the transceiver devices 11,13,16 according to the specific sector scanned.

It is thereby possible to associate a subset of transceiver devices 11,13,16 with a specific sector of the transport surface 51, reconstructing a location map of the individual transceiver devices 11,13,16. By comparing the location map reconstructed by the verification device 17 and the map of packages 12 displaced on the transport surface 51 created by the query device 15, it is possible to validate the correctness of the data entered during loading.

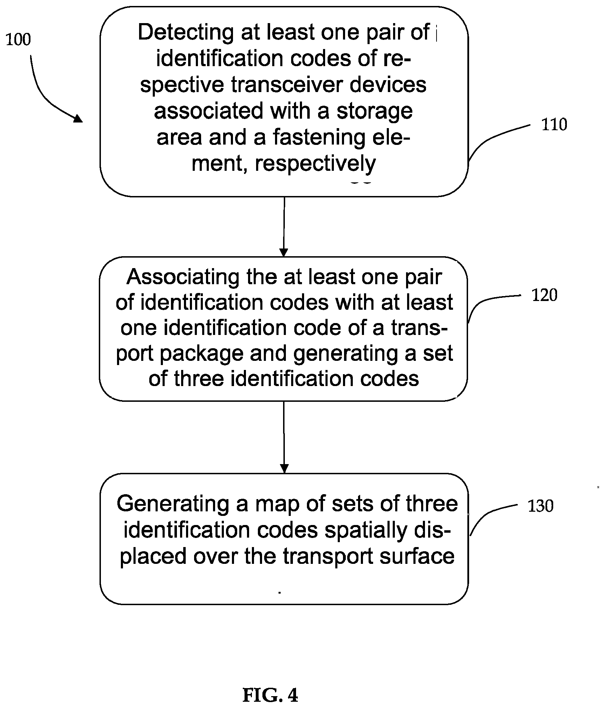

The method of detecting and signalling anomalies in securing a load in an industrial vehicle according to the present invention comprises the following steps schematically shown in Fig. 4.

First of all, a plurality of identification codes of at least two passive-type transceiver devices 11,13 are detected (step 110), in which a first transceiver device 11 is constrained to the transport surface 51 of the industrial vehicle in a given storage area and a second transceiver device 13 is constrained to a fastening element 14 constrained or anchored to the transport surface 51 at the given storage area.

The detected identification codes are then associated (step 120) with at least a third identification code of a transport package 12 stored in the given storage area 51a.

Preferably, the third identification code is an identification code of a passive-type transceiver device 16 constrained to the transport package 12 stored in the given storage area 51a.

The detection of the plurality of identification codes is carried out by means of the portable query device 15 during the loading of packages 12 on the transport surface 51.

The first identification code of the first transceiver device 11 is associated with a given area 51a of the transport surface 51. Such an association operation takes place manually or automatically if the coordinates of the transport surface 51 are recorded in the first transceiver device 11 in the form of the first verification code. Thereby, additional identification codes are also indirectly associated with the given area 51a of the transport surface 51 detected manually or automatically. Thus, a map of the spatial displacement (step 130), within the transport surface 51, of the sets of three identification codes identifying respectively the storage area 51a, the fastening element 14 and the package 12 associated with each other is created.

Advantageously, during such detection, the verification codes comprised in the transceiver devices 11,13,16 or retrieved from a database accessible through the query device 15 on the basis of the identification codes of the transceiver devices 11,13,16 are also read.

In particular, the verification code of the third transceiver device 16 associated with the transport package 12 comprises a datum related to the weight of the package 12, preferably also associated with a datum indicative of the overall dimensions of the package 12. This makes it possible to obtain a map of the distribution of weight on the transport surface 51 from the spatial dislocation map of the packages and to check for any excess load on the vehicle axles. In the presence of the datum indicative of the dimensions of the package 12, the package displacement map and consequently the weight distribution map is advantageously a three-dimensional map.

If in addition or alternatively the verification code of the third transceiver device 16 associated with the transport package 12 comprises a datum related to a product type contained in the respective transport package, it is possible to verify a congruence of the distribution of the product types on the transport surface with respect to quantity and compatibility criteria of the product types, for example by signalling the proximity of potentially dangerous products if they are placed side by side, such as a fuel and an oxidiser, or the exceeding of limit transport quantities of specific product types.

Furthermore, on the basis of the verification codes read or retrieved, the compatibility of the set of three identification codes of the three transceiver devices 11,13,16 is verified during the loading operations by carrying out one or more of the following checks:
- the correspondence of the license plate of the vehicle on which the package 12 was loaded is checked against the license plate of the vehicle intended for transport, possibly registered in the database accessible to the query device 15;
- the expiration and/or revision date of the fastening elements 14 is verified; and
- a compatibility of the specific fastening element 14 with the weight of the package 12 is verified.

If, for example, the fastening element 14 is found to have exceeded the expiration date and/or revision date or to be unsuitable for anchoring the specific package 12, the query device 15 signals the inconsistency to the operator, who then proceeds to replace the fastening element 14 and detect a new set of three identification codes.

At the end of the loading operations, the operator preferably enters one or more identification data of the mission to be carried out (e.g., origin, destination, identification of the transporter, etc.) and completes the data collected with an image of the complete load and the travel documents.

When loading is complete, a verification step preferably occurs of the data collected by the verification device 17 which detects all the transceiver devices 11,13,16 present on the transport surface 51 and checks a correspondence with the map of sets of three identification codes created by the query device 15 during the loading operations, i.e., the package displacement map.

In particular, the verification device 17 scans a first sector of the transport surface 51, detects the transceiver devices 11,13,16 present in such a sector, and verifies a match with the transceiver devices 11,13,16 which the map of packages 12 displaced on the transport surface 51 created by the query device 15 shows in such a first sector. Scanning limited to a certain sector is possible by applying appropriate filters according to the power returned by the passive transceiver device 11,13,16 in responding to the solicitation transmitted by the verification device 17.

Preferably, in order to verify the correspondence of the transceiver devices 11,13,16 in the first sector, the verification device 17 performs the following steps prior to the detection step:
- the map of packages 12 displaced on the transport surface 51 created by the query device 15 is loaded; and
- the transceiver devices 11,13,16 that the map of packages 12 shows in the first sector are identified.

For the correspondence verification step, an algorithm is therefore applied so that all the transceiver devices 11,13,16 detected in the first sector, but not shown in the map of packages 12 at the first sector, and the transceiver devices 11,13,16 shown in the map of packages 12 at the first sector, but not detected, are highlighted.

The operations of scanning, detecting and verifying placement in the sector are repeated for each sector forming the transport surface 51 in order to obtain a complete map of the discrepancies between the actual placement of the transceiver devices 11,13,16 and the map of the packages 12.

If the identification code of the package 12 is the code of a third transceiver device 16, during the unloading step, for example partial, a new verification step preferably occurs, in which the verification device 17 detects the set of transceiver devices 11,13,16 present on the transport surface 51, updating the map of sets of three identification codes displaced on the surface. Such an operation makes it possible, on the one hand, to verify congruence with respect to a set of data related to the packages to be unloaded 12, identifying that all and only the packages 12 which have reached their destination have been unloaded and, on the other hand, checking that the load distribution plan is still balanced and compatible with the axle loads.

## Claims

1. System (10) for detecting and signalling anomalies in securing a load in an industrial vehicle comprising:
- a transport surface (51) of an industrial vehicle and a plurality of first passive-type transceiver devices (11) each constrained to the transport surface (51) at a respective storage area (51a) of the transport surface (51), each first passive transceiver device (11) of the plurality of first passive transceiver devices (11) comprising a first identification code;
- at least one fastening element (14) and at least a second passive-type transceiver device (13), the at least a second passive transceiver device (13) comprising a second identification code and being constrained to the at least one respective fastening element (14), wherein the at least one fastening element (14) is constrainable to the transport surface (51) so that it can exert a holding action on a transport package (12) stored at a respective storage area of the transport surface (51); and
- at least one portable-type query device (15) configured to detect, for at least one storage area (51a) of the transport surface (51), a first and a second identification code respectively of a first passive transceiver device (11) constrained to the at least one storage area (51a) of the transport surface (51) and of a second passive transceiver device (13) associated with a fastening element (14) acting on the at least one storage area (51a) of the transport surface (51), and to generate at least a set of three identification codes by associating the first and second detected identification codes, with a third identification code of a transport package (12) intended to be stored in the at least one storage area.

2. System (10) according to claim 1, wherein the query device (15) is configured to generate a spatial displacement map in which the at least one set of three identification codes generated by the query device (15) is spatially displaced on the transport surface (51), the spatial displacement map being a one-dimensional, two-dimensional or three-dimensional map.

3. System (10) according to claim 1 or 2, wherein the third identification code is an identification code of a third passive-type transceiver device (16) constrained to the transport package (12).

4. System (10) according to claim 3, comprising at least one verification device (17) configured to detect the set of transceiver devices (11,13,16) present on the transport surface (51) and verify a correspondence with the set of transceiver devices (11,13,16) detected by the query device (15).

5. System (10) according to claim 4, wherein the verification device (17) is configured to detect the spatial displacement of the passive transceiver devices (11,13,16) present on the transport surface (51) and verify a correspondence with the spatial displacement map of the at least one set of three identification codes on the transport surface (51) generated by the query device (15).

6. System (10) according to any one of the preceding claims, wherein at least one of the first (11) and the second (13) passive transceiver device detected for the at least one storage area (51a) comprises a verification code stored therein and/or the system (10) comprises a database accessible by the query device in which at least one verification code associated with the transport package identification code is stored; and/or
the system (10) comprises a database accessible by the query device (15) in which at least one verification code is stored, which is associated with at least one of the first (11) and the second (13) passive transceiver device detected for the at least one storage area (51a) and the identification code of the transport package (12); and/or
wherein the at least one of the first (11), the second (13) and the third (16) passive transceiver device detected for the at least one storage area (51a) comprises a verification code stored therein.

7. System (10) according to claim 6, wherein the query device (15) comprises electronic processing means configured to read or retrieve from the database the at least one verification code comprised in or associated with the first (11) and/or the second (13) passive transceiver device and/or the identification code of the transport package (12) relating to the at least one set of three identification codes, and, based on the at least one verification code, process information about the correct positioning of the package (12) inside the transport surface (51) and/or securing the package (12) by means of the fastening element (14).

8. System (10) according to any one of claims 4 to 7, wherein
- the query device (15) and the verification device (17) are implemented by means of the same hardware; and/or
- the verification device (17) is a different device from the query device (15), preferably made as an antenna passage configured to allow an industrial vehicle to transit through it.

9. System (10) according to any one of claims 3 to 8, wherein the first (11), second (13) and third (16) passive transceiver devices are implemented by RFID technology or dual frequency technology and/or wherein the query device (15) is configured to operate in a frequency range between 3 MHz - 30 MHz and/or 300 MHz - 3 GHz.

10. Method (100) for detecting and signalling anomalies in securing a load in an industrial vehicle comprising the steps consisting of:
- detecting (110), by means of at least one portable-type query device (15), at least one pair of identification codes of respective passive-type transceiver devices (11,13), in which a first passive transceiver device (11) is constrained to a transport surface (51) of an industrial vehicle in a given storage area (51a) and a second passive transceiver device (13) is constrained to a fastening element (14) anchored to the transport surface (51) so that it can exert a holding action on a transport package (12) stored in the given storage area (51a);
- associating (120) the at least one pair of identification codes of the first (11) and second (13) passive transceiver device with at least one identification code of the transport package (12) stored in the given storage area (51a), generating at least one set of three identification codes; and
- associating (130) the at least one set of three codes with the given storage area (51a) of the transport surface (51), generating a one-dimensional, two-dimensional or three-dimensional spatial displacement map in which the at least one set of three identification codes is spatially displaced on the transport surface (51).

11. Method (100) according to claim 10, wherein the identification code of a transport package (12) is an identification code of a third passive transceiver device (16) and the step of detecting (110) the set of passive transceiver devices (11,13) present on the transport surface (51) additionally comprises detecting the third passive transceiver device (16).

12. Method (100) according to claim 10 or 11, further comprising the step of detecting the set of transceiver devices (11,13,16) present on the transport surface (51) through a verification device (17), and verifying a correspondence with the at least one set of three identification codes detected by means of the at least one query device (15).

13. Method (100) according to claim 12, wherein the step of detecting the set of passive transceiver devices through a verification device (17) comprises:
- detecting the spatial distribution of the passive transceiver devices (11,13,16) present on the transport surface (51) and verifying a correspondence with the spatial displacement map of the at least one set of three identification codes on the transport surface (51) generated during the association step (130).

14. Method (100) according to any one of claims 10 to 13, comprising the steps of detecting or retrieving the at least one verification code associated with the at least one passive transceiver device (11,13) and/or the identification code of the transport package (12) related to the at least one set of three identification codes and, based on the at least one verification code carrying out one or more of the following verification operations:
- on the basis of a plurality of third verification codes each associated with an identification code of a transport package (12) and relating to a weight of the respective transport package (12), verifying a congruence of the weight distribution on the transport surface with the vehicle capacity limits;
- on the basis of a plurality of third verification codes each associated with an identification code of a transport package (12) and relating to a type of product contained in the respective transport package (12), verifying a congruence of the distribution of the product types on the transport surface with respect to compatibility criteria of the product types and/or with respect to limit transport quantities per product type;
- on the basis of a first verification code associated with the first passive transceiver device (11) and relating to a vehicle license plate, verifying a correspondence with a vehicle license plate registered for transport of the transport package (12);
- on the basis of a second verification code associated with the second passive transceiver device (13) and relating to an expiration date and/or a revision date of the fastening element (14), verifying whether at least one between the expiration date and the revision date has passed; and
- on the basis of a second verification code associated with the second passive transceiver device (13) and relating to a limit weight of a package that can be secured through the fastening element (14) and a third verification code associated with an identification code of a transport package (12) and related to a weight of the transport package (12), verifying whether the weight of the transport package (12) exceeds the limit weight of a package that can be secured through the fastening element (14).

15. Method (100) according to any one of claims 11 to 14, wherein
- the query device (15) and the verification device (17) are implemented by means of the same hardware; and/or
- the verification device (17) is a different device from the query device (15), preferably made as an antenna passage configured to allow an industrial vehicle to transit through it.
